# FASCICULE DE BREVET EUROPEEN

(11) **EP 3 315 001 B1**
(45) Date de publication et mention de la délivrance du brevet: **04.12.2019**
(21) Numéro de dépôt: 17306475.9
(22) Date de dépôt: 26.10.2017
(51) Int. Cl.: A01D 34/66

(54) **MACHINE AGRICOLE AVEC DES PATINS ÉQUIPÉS DE DOUBLURES INTERCHANGEABLES**
LANDWIRTSCHAFTLICHE MASCHINE MIT KUFEN, DIE MIT AUSTAUSCHBAREN VERSTÄRKUNGEN AUSGERÜSTET SIND
AGRICULTURAL MACHINE WITH SKIDS PROVIDED WITH INTERCHANGEABLE LINERS

(30) Priorité: 28.10.2016 FR 1660476
(43) Date de publication de la demande: 02.05.2018
(73) Titulaire: Kuhn SA (Societe Anonyme), 67700 Saverne (FR)
(72) Inventeur: WILHELM, Joël, 57820 SAINT-LOUIS (FR)
(74) Mandataire: Nuss, Laurent

(56) Documents cités:
- EP-A1- 0 223 302
- EP-A1- 0 260 750
- EP-A1- 2 229 046
- WO-A1-2012/034872

## Description

La présente invention concerne le domaine des machines agricoles, et particulièrement les machines dont une partie du poids repose, durant le travail, sur le sol au moyen de patins, disposés notamment sous les outils de travail. L'invention est destinée à s'appliquer en particulier aux machines de fenaison telles que les faucheuses à disques, ou les andaineurs, mais peut également viser d'autres machines agricoles attelées à un véhicule tracteur et dont au moins une partie est en appui glissant sur le sol lors de leur utilisation.

L'invention a pour objet, dans ce contexte, une machine agricole avec des patins équipés de doublures interchangeables.

Plusieurs types de machines agricoles présentent des outils, des équipements ou des organes fonctionnels, que l'on peut génériquement désigner par élément de travail, glissant sur le sol lors de leur mise en œuvre, l'appui au sol s'effectuant par le biais d'au moins un patin ou d'au moins un ensemble patin + doublure, généralement d'une pluralité de ces derniers. L'élément de travail peut comporter par exemple un ou plusieurs rotor(s) d'andainage à axes sensiblement horizontaux, ou encore une barre de coupe, dans le cas des faucheuses.

Ainsi, dans le cas des faucheuses à disques notamment, la barre de coupe repose sur le sol via une semelle composée d'au moins un patin et optionnellement d'au moins une doublure, ce afin d'éviter d'endommager le tapis végétal, d'assurer un bon suivi du terrain et ainsi d'obtenir une bonne qualité de coupe, y compris sur terrain accidenté ou vallonné.

Le patin est une pièce fixée sous la barre de coupe ou formée dans la paroi inférieure du carter de cette dernière, et sur laquelle la machine repose et glisse sur le sol lors du travail. L'avant du patin est destiné à éviter les projections et à encaisser les chocs avec divers obstacles, comme par exemple des pierres, que la barre de coupe peut rencontrer sur son chemin, de manière à protéger les autres pièces - notamment les éléments tournant (pignons, disques...) - dont le remplacement demande une intervention plus compliquée et/ou plus longue.

D'autre part, les patins permettent de surélever la barre de coupe sous la partie centrale des disques et de laisser des intervalles entre ces surélévations afin de favoriser le dégagement de la terre sous la barre, au niveau des intervalles entre les patins.

Une telle faucheuse équipée de patins est notamment divulguée par le document EP-A-0 360 716 ainsi que par le document WO2012/034872 A1.

Dans certaines conditions de fauche et sur certains types de terrains, les patins s'usent très rapidement.

De ce fait, la plupart des fabricants et constructeurs proposent déjà, dans l'état de la technique, des doublures à fixer sous les patins et qui peuvent être remplacées plus facilement que ces derniers.

Afin de préserver le tapis végétal et de diminuer l'usure des patins ou des doublures, il est préférable de répartir le poids de la machine au maximum en présentant une surface de contact avec le sol la plus importante possible. Selon le picage (angle entre le plan contenant les couteaux des disques et le plan du sol, en vue latérale), la zone d'appui des patins est plus ou moins décalée dans la direction d'avance en utilisation normale de la machine. Ainsi, il est préférable de disposer de patins et doublures les plus larges possible, y compris à l'avant.

Compte tenu de la forme convexe des patins (en vue de devant), il est plus simple de réaliser l'assemblage de l'avant d'une doublure avec le patin correspondant au milieu de ce dernier. Avantageusement, la partie avant de la doublure peut alors être plus étroite. Ceci permet d'autre part une économie de poids.

Par le document US 5 784 866, il est ainsi connu de l'état de la technique, de pourvoir les patins de doublures démontables et présentant des bords frontaux de part et d'autre d'une extrémité frontale, ces bords frontaux formant un V dont la pointe est dirigée dans la direction d'avance lors de l'utilisation de la machine. Une telle construction permet de guider la terre et les débris vers l'arrière.

Ces bords frontaux, une fois la doublure assemblée avec le patin, se trouvent entre le sol et le patin et forment alors par endroits, une marche abrupte ou dentelure en relief sur le profil du dessous de barre.

Ce relief sous forme d'épaulement a pour inconvénient d'accrocher et de retenir la terre, l'herbe et d'autres débris, ce qui provoque une détérioration du tapis végétal. De plus, les amas ainsi formés peuvent, dans certaines conditions, s'agrandir au point d'atteindre la zone de surcoupe, ce qui perturbe la qualité de coupe de manière supplémentaire. Enfin, la terre et les débris amassés de la sorte sous la barre de coupe se retrouvent sous pression et peuvent se glisser entre la doublure et le patin et avoir tendance à les écarter. Cet effort d'écartement peut aller jusqu'à l'arrachement de la doublure et endommager sévèrement la barre de coupe.

Il est également connu, dans l'état de la technique, et plus particulièrement par les faucheuses à disques de la demanderesse connues sous la désignation "Optidisc" (marque déposée), de fixer à la sous-face du patin, par soudure, une doublure dont les bords frontaux forment un V (pointe dirigée dans la direction d'avance en utilisation). Toutefois, l'interchangeabilité de cette doublure est problématique et une certaine résistance à l'avance, ainsi qu'une tendance à l'accrochage de terre et de débris, demeurent, du fait du rebord saillant constitué par la doublure rapportée sur la sous-face du patin.

Le but de la présente invention est de surmonter les principaux inconvénients précité et, plus particulièrement, consiste à fournir une machine agricole du type précité, dont les doublures protégeant les patins évitent l'accumulation de terre, herbe ou autres débris au niveau de leur bord frontal et assurent, le cas échéant, efficacement l'évacuation guidée de la terre et des débris vers l'arrière, et ce, d'une manière simple et peu onéreuse, tout en présentant avantageusement une interchangeabilité aisée.

A cet effet, l'invention a pour objet une machine agricole telle qu'une faucheuse à disques, un andaineur ou analogue, reposant au moins en partie en appui sur le sol lors de son utilisation et pourvue d'un élément de travail et de patins destinés à glisser sur le sol, ces patins étant formés dans une paroi inférieure dudit élément de travail ou solidarisés avec cette paroi inférieure, chaque patin étant pourvu d'une doublure présentant au moins une extrémité frontale et, de part et d'autre de cette extrémité frontale, un bord frontal,
machine agricole caractérisée en ce qu'au moins un des bords frontaux de la doublure de chaque patin présente un relief dont au moins une partie pénètre dans une empreinte formée dans le patin correspondant.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
La figure 1 est une représentation schématique en vue de dessous d'une machine agricole selon l'invention, du type faucheuse à disques, comprenant un élément de travail sous forme de barre de coupe pourvue de patins protégés en accord avec une première variante de réalisation ;
La figure 2 est une vue partielle en perspective de dessous de la barre de coupe faisant partie de la machine représentée figure 1 ;
Les figures 3 et 4 sont des vues en coupe selon A-A et B-B respectivement de l'objet présenté figure 1 ;
Les figures 5A et 5B sont des vues en perspective, de dessus et de dessous respectivement, d'un patin (isolé) représenté figures 1, 2, 3 et 4 ;
Les figures 6A et 6B sont des vues en perspective, de dessous et de dessus respectivement, d'une doublure, représentée sur les figures 1, 2, 3 et 4 et adaptée pour un montage sur le patin représenté figures 5A et 5B ;
Les figures 7A et 7B sont des vues de dessous illustrant deux autres variantes de réalisation d'un ensemble patin/doublure, plus particulièrement l'assemblage frontal entre un patin et sa doublure ;
Les figures 8A et 8B sont des vues en perspective, de dessus et de dessous respectivement, d'un patin selon une autre variante de réalisation de l'invention ;
Les figures 9A et 9B sont des vues en perspective, de dessous et de dessus respectivement (similaires aux vues des figures 6A et 6B), d'une doublure selon une variante de réalisation de l'invention et adaptée pour un montage sur le patin représenté figures 8A et 8B, et,
Les figures 10A et 10B sont des vues de détail et en coupe, partiellement selon B-B, de l'objet représenté figure 1 selon deux modes de réalisation différents.

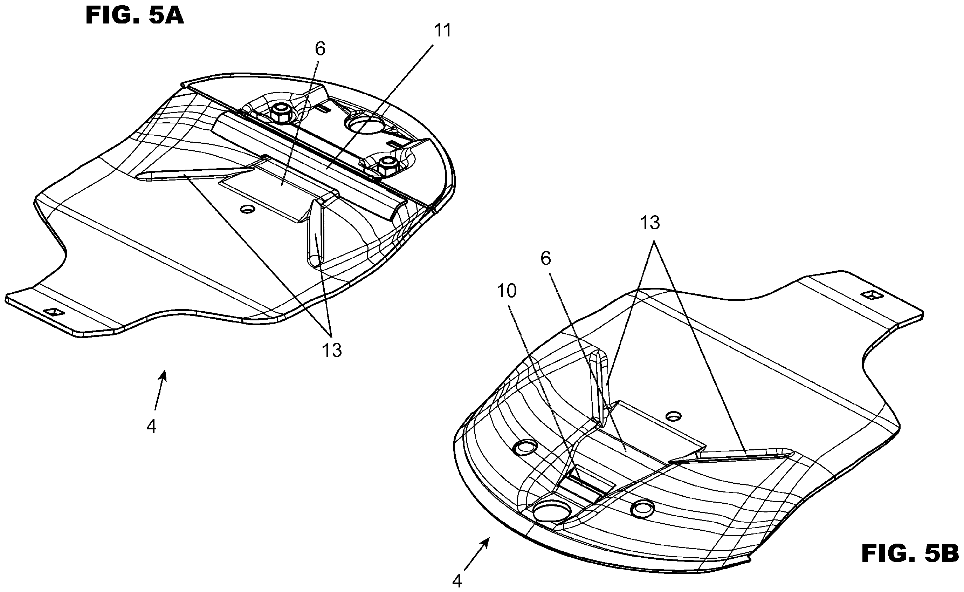

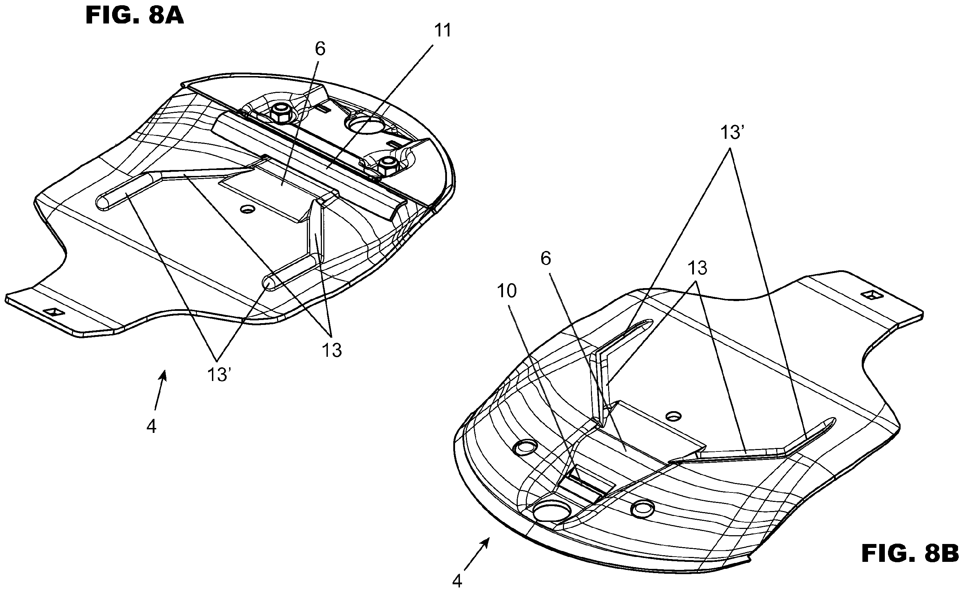

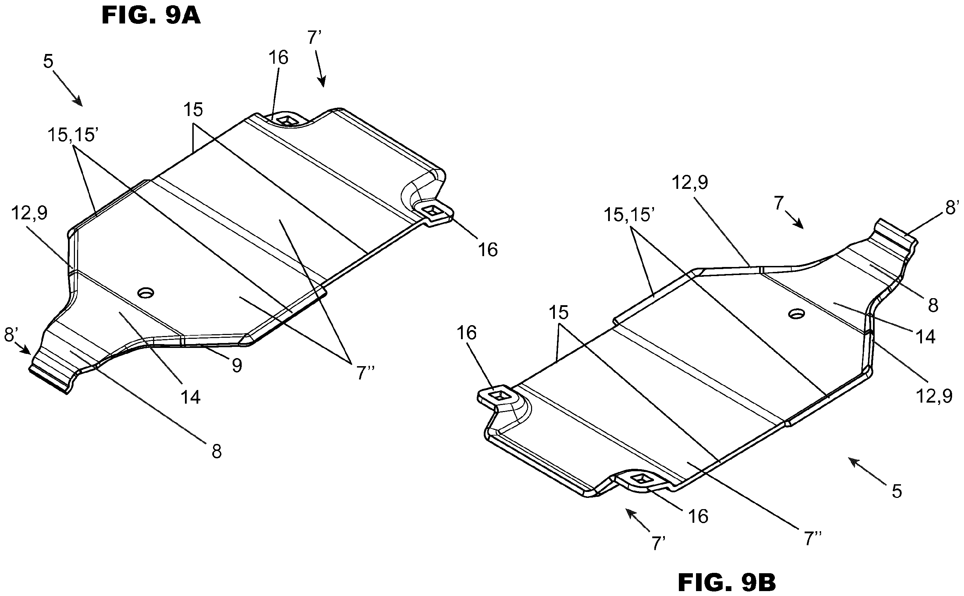

Sur les figures 5, 6, 8 et 9, des représentations de courbes d'épaisseur plus fine que les arêtes visibles, également appelées arêtes fictives, sont tracées à titre d'information, afin d'améliorer la visualisation des pièces.

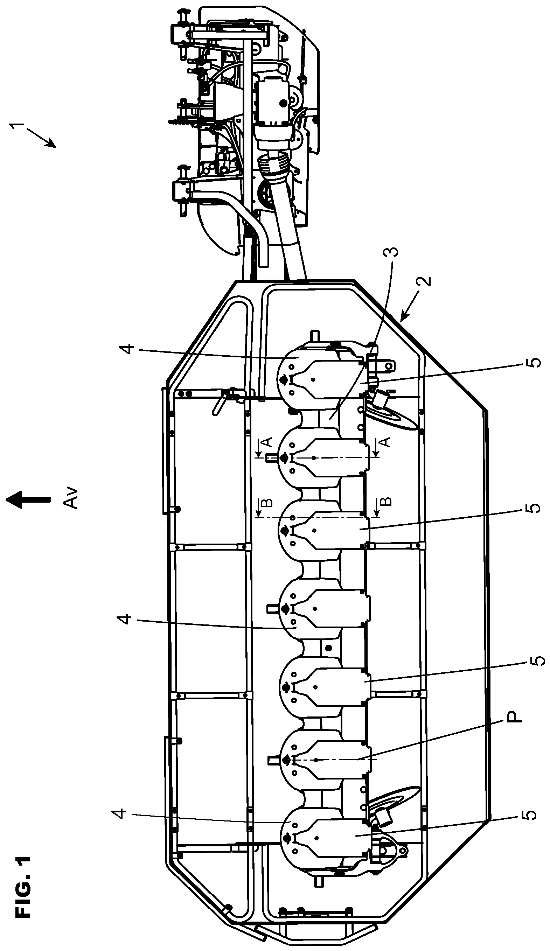

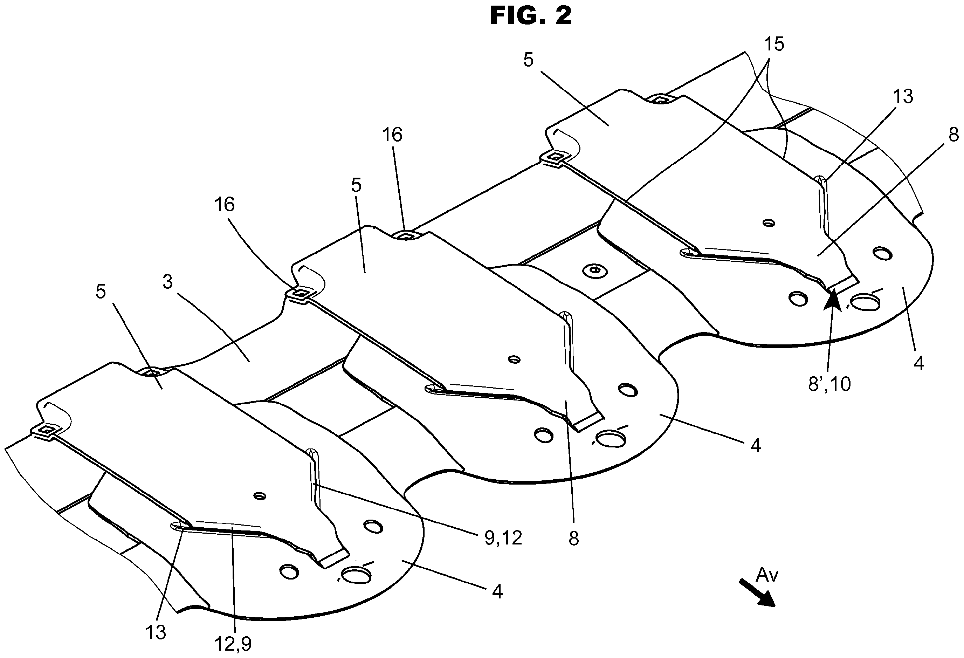

La figure 1 et partiellement les figures 2 à 9, illustrent une machine agricole 1 (ici plus particulièrement une faucheuse à disques) avec un élément de travail 2 pourvu au niveau de sa paroi inférieure 3 de patins 4.

Ces patins 4 sont formés dans la paroi inférieure 3 dudit élément de travail 2 ou solidarisés rigidement avec cette dernière, et constituent des zones d'appui proéminentes, chaque patin 4 étant pourvu d'une pièce d'usure 5 formant doublure et rapportée sur le patin 4 (sur la face inférieure de ce dernier).

Chaque doublure 5 présente au moins une extrémité frontale 8 et des bords frontaux 9 (avec un bord frontal 9 de part et d'autre de l'extrémité ou de chaque extrémité frontale 8).

Conformément à l'invention, au moins un bord frontal 9 de la doublure 5, préférentiellement les deux, présente(nt) un relief 12 dont au moins une partie pénètre dans une empreinte 13 formée dans le patin 4 correspondant.

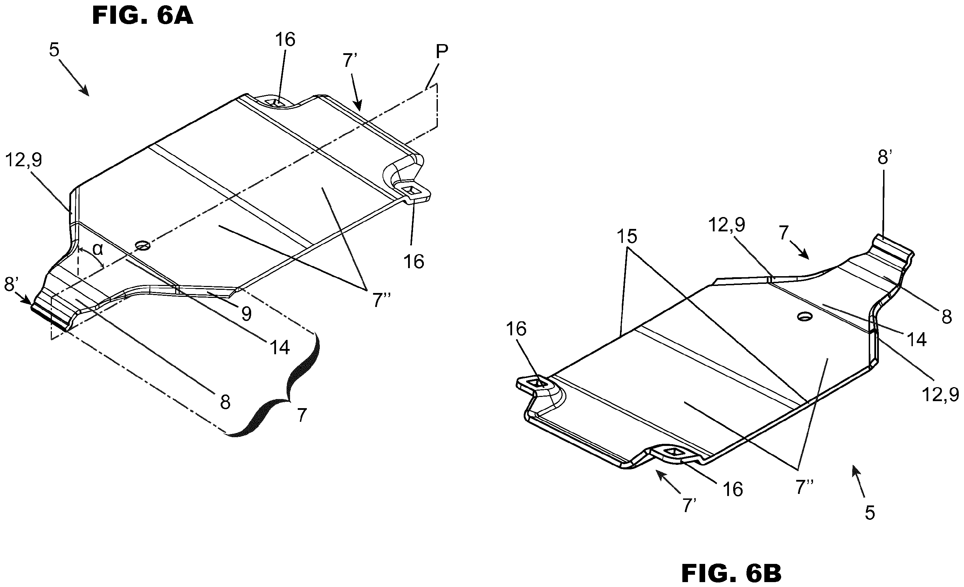

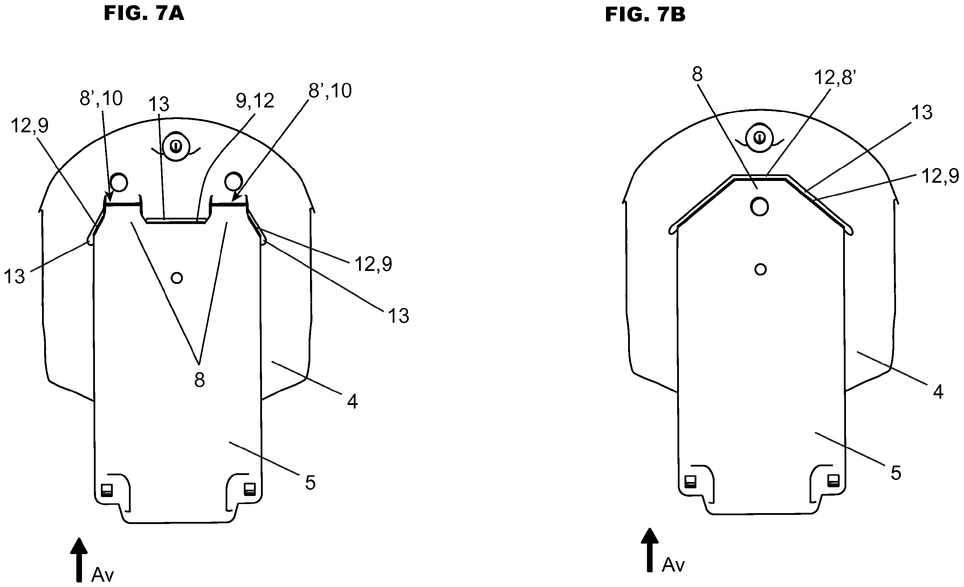

Les bords frontaux 9, qui sont situés de part et d'autre de l'extrémité ou de chaque extrémité frontale 8, sont, préférentiellement, visibles sur une vue de devant de la doublure 5 (non représentée). Chaque doublure 5 peut comprendre une partie avant 7, se terminant par une ou plusieurs extrémités frontales 8, une partie arrière 7' et une partie centrale 7" constituant le corps de ladite doublure 5, ce corps présentant préférentiellement une (ou plusieurs) forme carrée ou rectangulaire (voir figures 6A et 6B). Une zone intermédiaire 14 relie l'extrémité frontale 8 considérée au corps 7" de la doublure 5. Un bord frontal 9 relie ainsi un bord de l'extrémité 8 à un bord latéral 15 du corps 7" de la doublure 5, directement ou indirectement. Lorsque plusieurs extrémités frontales 8 sont présentes, un bord frontal 9 peut également relier deux extrémités 8 (voir figure 7A).

Ainsi, l'invention propose une solution pour protéger les patins 4 d'une machine agricole 1 du type évoqué en introduction, la sous-face de la paroi inférieure 3 de l'élément de travail 2 présentant un profil plus lisse, préférentiellement dépourvu de tout décrochement, marche abrupte, arrête saillante ou épaulement notoire entre la doublure de protection 5 et le patin 4 associé, réduisant notablement la résistance au mouvement lors de l'avance de la machine agricole 1 au moins partiellement en appui sur le sol par l'intermédiaire des patins 4. La transition entre les zones frontales non recouvertes de chaque patin 4 et la doublure protectrice 5 est lissée.

En proposant d'arrondir la majorité du bord avant de la partie avant 7 des pièces 5 formant doublures, à la manière d'une spatule de ski, et en noyant une partie au moins de l'épaisseur desdites doublures 5 dans un logement en creux ménagé dans la paroi des patins 4, l'invention permet à ces doublures 5, bien que protégeant efficacement les patins 4 en constituant des semelles d'usure interchangeables pour ces derniers, exposées aux agressions les plus sévères en utilisation, de se fondre sensiblement dans la forme extérieure desdits patins 4, et de ce fait n'influencent pas négativement, voire favorisent le glissement.

Avantageusement, la largeur de l'extrémité ou de chaque extrémité frontale 8 de la doublure 5 est inférieure à la largeur maximale de la doublure 5, cette ou chaque extrémité 8 présentant ainsi une forme effilée dans la direction d'avance Av de la machine 1 en utilisation.

De ce fait, la doublure 5 peut être fixée à l'avant du patin 4 sans ajouter excessivement de poids à la machine agricole 1 tout en lui permettant de répartir son poids sur une surface maximale. De plus, le patin 4 présentant sur le devant une forme courbe (en vue de devant), la doublure 5 ne se doit ainsi pas d'épouser cette forme, ce qui facilite la réalisation de cette dernière.

Dans un mode de réalisation préféré, c'est au niveau du corps 7" que la doublure 5 présente sa largeur maximale.

En accord avec un mode de réalisation préféré, chaque relief 12 est formé par le recourbement vers le haut, au moins partiel, du bord frontal 9 correspondant.

Une telle conception permet de réaliser facilement le relief 12 des bords frontaux 9 de la doublure 5, à moindre coût. Alternativement, les reliefs 12 peuvent aussi être formés par des nervures ou des épaississements de matières analogues, voire par une ou plusieurs pièces supplémentaires rapportées entre la doublure 5 et le patin 4.

Dans un mode de réalisation préféré, le relief 12 de la doublure 5 pénètre dans l'empreinte 13 du patin 4 sur toute la longueur du relief 12.

Selon une variante constructive pratique avantageuse du mode de réalisation précité, chaque bord frontal 9 forme un angle α avec la direction d'avance Av, par exemple compris entre 30 et 60 degrés, de préférence entre 40 et 50 degrés.

Comme il ressort de la figure 7A, un bord frontal 9 ou un des bords frontaux 9 peut alternativement former un angle α de 90 degrés avec la direction d'avance Av, en particulier un bord 9 s'étendant entre deux extrémités frontales 8.

Conformément à une autre caractéristique constructive avantageuse de l'invention, ressortant notamment des figures 1 et 6A, chaque doublure 5 présente un plan de symétrie P orienté verticalement (c'est-à-dire perpendiculairement au plan du corps 7", en appui surfacique sur le sol en utilisation) et parallèlement à une direction d'avance Av et les bords frontaux 9 (ou au moins certains d'entre eux), sont disposés selon les ailes d'un V ouvert vers l'arrière et arrangés symétriquement par rapport au plan de symétrie P associé à la doublure 5 (figure 6B). Ce V virtuel présente un angle de 2 α entre ses deux ailes.

Une telle construction contribue à l'évacuation vers l'arrière de la terre et débris rencontrés lors de l'avance en appui sur le sol, et favorise le glissement de la machine agricole 1 sur le tapis végétal, tout en minimisant la détérioration de ce dernier due au passage de la machine 1.

On peut relever que la forme en Y de la partie avant 7 (formée de 8 + 14) et l'arrangement en V des reliefs 12 (à l'image des bords 9) favorisent l'évacuation vers le coté et vers l'arrière des amas de terre, de débris ou analogues rencontrés lors de l'avance de la machine 1 en appui sur le patin 4 et/ou la doublure 5.

Selon une variante de réalisation non représentée, les bords frontaux 9 s'étendant de part et d'autre de l'extrémité frontale 8 de la doublure 5 peuvent être arrondis (en vue de dessus).

Selon une autre variante de réalisation représentée à la figure 7A, la doublure 5 peut disposer de deux (ou plus) extrémités frontales 8, entre lesquels s'étendent un ou des bords frontaux 9.

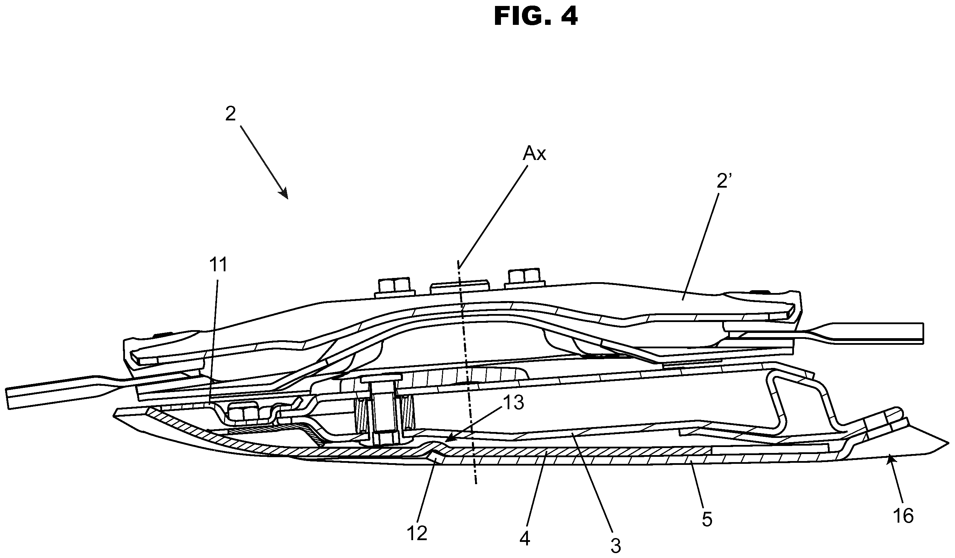

En accord avec un mode de réalisation préféré de l'invention, les empreintes 13 formées dans chaque patin 4 (pourvu d'une doublure 5) sont des gorges non-débouchantes (cf. figures 4, 5 et 8).

L'avantage d'empreintes 13 borgnes ou non-débouchantes, de bossage ou de zones renfoncées analogues, est que la terre ne peut ainsi pas pénétrer dans l'interstice entre le patin 4 et l'élément de travail 2. Cependant, l'invention n'exclue pas la réalisation d'empreintes 13 dans le patin 4 sous forme de rainures traversant totalement l'épaisseur du patin 4.

Préférentiellement, l'élément de travail 2 est une barre de coupe et la machine 1 consiste en une faucheuse à disques à axes de rotation Ax sensiblement verticaux ou légèrement inclinés vers l'avant. Cette faucheuse comporte un carter en au moins deux parties et dont la partie inférieure est constituée par la paroi inférieure 3 pourvue des patins 4. De plus, le plan de symétrie P de chaque doublure 5 comporte l'axe de rotation Ax du disque 2' associé au patin 4.

La machine agricole 1 sous forme de faucheuse, et la barre de coupe 2, peuvent par exemple être du type de celles décrites dans les demandes de brevets français n° 16 70280 et n° 16 70281 au nom de la demanderesse.

Selon une caractéristique du mode de réalisation préféré de l'invention, chaque doublure 5 est assemblée rigidement avec le patin 4 correspondant et/ou l'élément de travail 2.

Selon une variante de réalisation, des bords latéraux 15 de la doublure 5 présentent chacun un relief 15' dont au moins une partie pénètre dans des empreintes 13' formées dans le patin 4.

Avantageusement, la portion d'extrémité frontale 8 de la pièce formant doublure 5 présente une courbure sensiblement similaire à celle de la partie frontale du patin 4 correspondant, l'assemblage de l'extrémité frontale 8 de ladite pièce formant doublure 5 avec ledit patin 4 étant avantageusement réalisée par engagement mécanique, par exemple par accrochage. Cet assemblage est avantageusement bloqué et verrouillé par une seconde liaison par vissage ou par un moyen de fixation amovible analogue, préférentiellement au niveau d'une partie arrière 7' de la pièce formant doublure 5.

Une telle réalisation favorise à la fois la diminution de la résistance au mouvement des patins 4 et la rapidité d'exécution des opérations de montage / démontage des pièces 5 formant doublures.

En accord avec un mode de réalisation de l'invention ressortant des figures 2 à 4 et 6, la partie avant 7 de chaque pièce formant doublure 5, en forme de plaque, présente une constitution effilée se terminant par au moins une extrémité frontale 8 en forme de languette, dont la zone de bord libre ou portion extrêmale 8' est conformée pour venir en engagement par accrochage dans une ouverture 10 du patin 4.

L'assemblage de l'extrémité frontale 8 de la doublure 5 sur le patin 4 peut néanmoins également être réalisé autrement, par liaison par vissage par exemple.

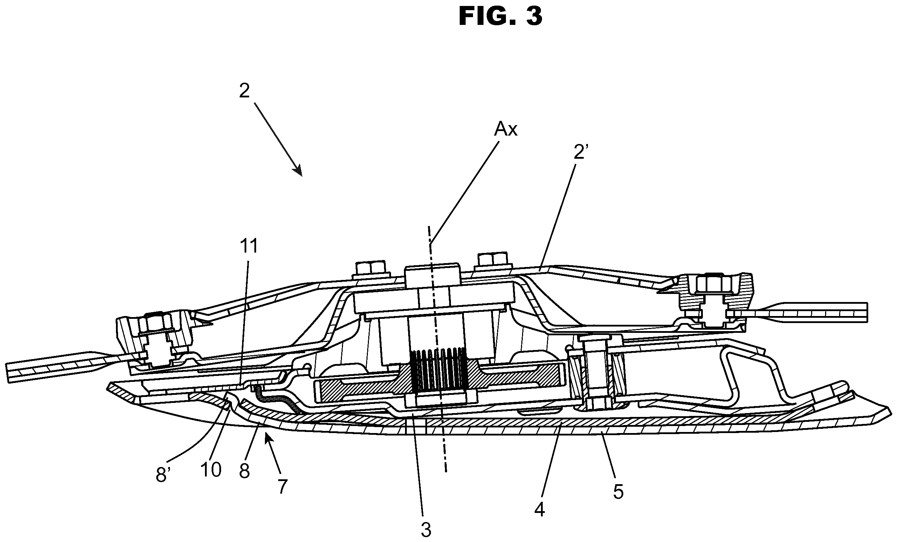

Toutefois, de manière avantageuse, l'extrémité ou chaque extrémité frontale 8 de chaque doublure 5 consiste en une languette cintrée vers le haut et dont la portion extrêmale 8' est conformée pour venir en engagement par accrochage dans une ouverture ou découpe 10 de la paroi inférieure 3 et/ou du patin 4 correspondant (figures 3, 4 et 7).

Préférentiellement, la liaison frontale par accrochage de chaque doublure 5 avec le patin 4 correspondant et/ou la paroi inférieure 3, et donc le montage de chaque doublure 5 au niveau du patin 4 correspondant, est verrouillée et bloquée en position par au moins une liaison par vissage, préférentiellement au niveau de sites 16 de fixation par vissage situés à l'opposé de l'extrémité frontale 8 de la doublure 5 considérée.

Selon une variante constructive pratique avantageuse du mode de réalisation précité, la ou chaque portion extrêmale 8' peut être structurée sensiblement en forme de S (figures 3 et 6), l'ouverture 10 dans le patin 4 concerné consistant avantageusement en une fente. A cette fente 10 est préférentiellement associée une structure 11 de verrouillage présente sur le patin 4 et/ou la paroi inférieure 3 et réalisant un blocage automatique en position de ladite portion extrêmale 8' dans l'ouverture 10 à l'état monté de ladite pièce formant doublure 5.

La structure 11 peut par exemple consister en une aile rapportée sur la face interne du patin 4 concerné et formant contrebutée bloquante pour la portion extrêmale 8' d'assemblage de l'extrémité frontale 8.

Toutefois, d'autres structures de la zone ou portion 8' sont possibles pour réaliser l'accrochage, comme par exemple un pli simple de la doublure 5.

Dans cette réalisation préférée de l'invention ressortant des figures annexées, la pièce 5 fournit un écran protecteur proéminent qui recouvre la majeure partie de la face inférieure de la plaque formant le patin 4 considéré, en particulier les régions du patin 4 les plus exposées aux contraintes et à l'usure lorsque le carter 2 est déplacé en appui glissant au sol. Seules deux régions frontales du patin 4, situées de part et d'autre de la partie avant 7 de la pièce 5 rapportée, moins exposées, ne sont pas recouvertes.

Préférentiellement, et afin d'aboutir à une surface d'appui plus importante, la pièce formant doublure 5 s'étend, vers l'arrière, au-delà du patin 4 sur lequel elle est montée en étant solidarisée rigidement avec ce dernier, par exemple par l'intermédiaire de sites de fixation 16 par vissage ou analogue, ménagés dans des pattes ou des pieds d'appui, préférentiellement réalisé(e)s d'un seul tenant dans le corps de ladite pièce 5.

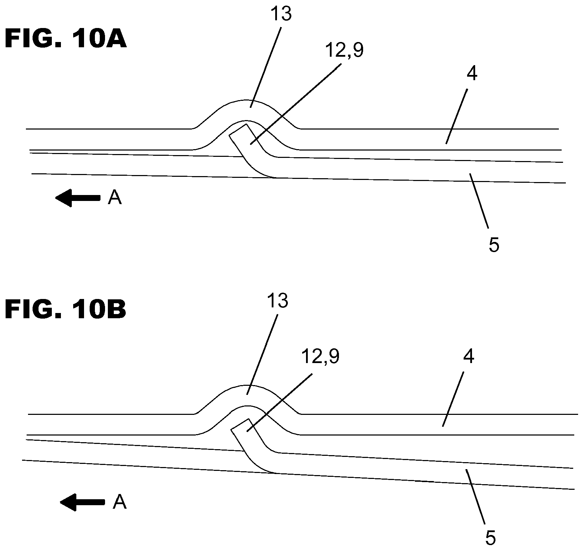

La doublure 5 peut être rapportée sur le patin 4 de manière à être plaquée contre celui-ci, comme le montrent les figures 3, 4 et 10A. Alternativement, en fonction des travaux à réaliser par la machine agricole 1 ou des circonstance de montage ou d'utilisation de cette dernière, il peut être prévu comme le montre la figure 10B, que la surface extérieure d'appui de la pièce formant doublure 5 soit inclinée par rapport à la face inférieure du patin 4 sur lequel elle est montée, par exemple du fait d'une épaisseur de paroi variable du corps de ladite pièce 5 ou de l'insertion de cales (non représentées) entre cette dernière et ledit patin 4, ce afin de pouvoir modifier l'angle nominal de picage.

Quelle que soit l'inclinaison de la doublure 5 rapportée par rapport au patin 4, la pénétration des reliefs 12 dans les empreintes 13 demeure.

Avantageusement, et notamment pour des raisons de facilité de fabrication et de coût de revient, l'empreinte 6 illustrée sur les figures 5A et 5B et formant logement pour l'extrémité frontale 8 au moins de la doublure 5 consiste en une zone emboutie de la plaque ou tôle du patin 4 concerné.

Selon une variante de réalisation de l'assemblage frontal représentée figure 7A, l'extrémité frontale 8 de la doublure 5 peut présenter une structure double avec un bord frontal 9 intermédiaire qui pénètre dans une empreinte 13 formée dans le patin 4. Dans cette variante, ladite extrémité frontale 8 peut présenter deux portions extrêmales 8' qui pénètrent avec engagement dans des ouvertures 10 correspondantes adaptées du patin 4 (voir figures 7A).

Selon une autre variante de réalisation représentée figure 7B, la portion extrêmale 8' présente également un relief 12 dont au moins une partie pénètre dans une empreinte 13 formée dans le patin 4 correspondant.

La présente invention concerne également, comme cela ressort des figures 2 et 4 à 10, un ensemble patin/doublure selon la revendication 13. Les figures 6 des dessins annexés montrent plus particulièrement une doublure 5 interchangeable pour patin 4 d'une machine agricole 1 telle que décrite précédemment, cette doublure 5 consistant en une pièce d'usure interchangeable. Cette doublure se présente préférentiellement sous la forme d'une plaque métallique mise en forme, avec des bords frontaux 9 pourvus de reliefs 12.

Les figures 5 des dessins annexés montrent plus particulièrement un patin 4 interchangeable pour une machine agricole 1 telle que décrite précédemment, ce patin 4 consistant en une pièce d'usure interchangeable et comportant des empreintes 13 pour recevoir au moins partiellement, par engagement ou emboîtement, les reliefs 12 d'une doublure 5 telle que décrite précédemment.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Machine agricole (1) telle qu'une faucheuse à disques, un andaineur ou analogue, reposant au moins en partie en appui sur le sol lors de son utilisation et pourvue d'un élément de travail (2) et de patins (4) destinés à glisser sur le sol, ces patins (4) étant formés dans une paroi inférieure (3) dudit élément de travail (2) ou solidarisés avec cette paroi inférieure (3), chaque patin (4) étant pourvu d'une doublure (5) présentant au moins une extrémité frontale (8) et, de part et d'autre de cette extrémité frontale (8), un bord frontal (9),
machine agricole (1) **caractérisée en ce qu'**au moins un des bords frontaux (9) de la doublure (5) de chaque patin (4) présente un relief (12) dont au moins une partie pénètre dans une empreinte (13) formée dans le patin (4) correspondant.

2. Machine agricole selon la revendication 1, **caractérisée en ce que** la largeur de l'extrémité ou de chaque extrémité frontale (8) de chaque doublure (5) est inférieure à la largeur maximale de ladite doublure (5).

3. Machine agricole selon l'une quelconque des revendications 1 et 2, **caractérisée en ce que** chaque relief (12) est formé par un recourbement vers le haut, au moins partiel, du bord frontal (9) correspondant.

4. Machine agricole selon l'une quelconque des revendications 1 à 3, **caractérisée en ce que** chaque bord frontal (9) forme un angle α avec la direction normale d'avance (Av) de la machine (1) en utilisation.

5. Machine agricole selon l'une quelconque des revendications 1 à 4, **caractérisée en ce que** chaque doublure (5) présente un plan de symétrie (P) orienté verticalement et parallèlement à la direction d'avance (Av) de la machine (1) en utilisation et **en ce que** leurs bords frontaux (9) sont disposés selon les ailes d'un V ouvert vers l'arrière et arrangés symétriquement par rapport au plan de symétrie (P) associé à la doublure (5) considérée.

6. Machine agricole selon l'une quelconque des revendications 1 à 5, **caractérisée en ce que** les empreintes (13) formées dans chaque patin (4) consistent en des gorges non-débouchantes.

7. Machine agricole selon la revendication 5, **caractérisée en ce qu'**elle consiste en une faucheuse à disques (2') à axes de rotation (Ax) sensiblement verticaux ou légèrement inclinés vers l'avant, avec une barre de coupe constituant l'élément de travail (2) et comportant un carter en au moins deux parties et dont la partie inférieure est constituée par la paroi inférieure (3) pourvue des patins (4) et **en ce que** le plan de symétrie (P) de chaque doublure (5) comporte l'axe de rotation (Ax) du disque (2') associé au patin (4) correspondant.

8. Machine agricole selon l'une quelconque des revendications 1 à 7, **caractérisée en ce que** chaque doublure (5) est assemblée rigidement avec le patin (4) correspondant et/ou l'élément de travail (2).

9. Machine agricole selon l'une quelconque des revendications 1 à 8, **caractérisée en ce que** l'extrémité ou chaque extrémité frontale (8) de chaque doublure (5) consiste en une languette cintrée vers le haut et dont la portion extrêmale (8') est conformée pour venir en engagement par accrochage dans une ouverture ou découpe (10) de la paroi inférieure (3) et/ou du patin (4) correspondant.

10. Machine agricole selon la revendication 9, **caractérisée en ce que** la liaison frontale par accrochage de chaque doublure (5) avec le patin (4) correspondant et/ou la paroi inférieure (3), et donc le montage de chaque doublure (5) au niveau du patin (4) correspondant, est verrouillée et bloquée en position par au moins une liaison par vissage, préférentiellement au niveau de sites (16) de fixation par vissage situés à l'opposé de l'extrémité frontale (8) de la doublure (5) considérée.

11. Machine agricole selon l'une quelconque des revendications 9 et 10, **caractérisée en ce que** la ou chaque portion extrêmale (8') est structurée sensiblement en forme de S, **en ce que** l'ouverture (10) consiste en une fente et **en ce qu'**une structure de verrouillage (11) associée à cette fente (10) est présente sur le patin (4) concerné et/ou la paroi inférieure(3).

12. Machine agricole selon l'une quelconque des revendications 1 à 11, **caractérisée en ce que** les bords latéraux (15) de la doublure (5) présentent chacun un relief (15') dont au moins une partie pénètre dans des empreintes (13') formées dans le patin (4).

13. Ensemble patin/doublure pour une machine agricole (1) telle qu'une faucheuse à disques, un andaineur ou analogue selon l'une quelconque des revendications 1 à 12, ensemble **caractérisé en ce qu'**il est constitué, d'une part, par un patin (4) et, d'autre part, par une doublure (5) assemblée rigidement avec le patin (4) en étant rapportée sur la face inférieure de ce patin (4), ledit patin (4) et ladite doublure (5) consistant en des pièces d'usure interchangeables, **en ce que** la doublure (5) consiste en une plaque métallique mise en forme, avec des bords frontaux (9) situés de part et d'autre de l'extrémité frontale (8) de ladite doublure (5) et pourvus de reliefs (12) et **en ce que** le patin (4) comporte des empreintes (13) recevant au moins partiellement, par engagement ou emboîtement, les reliefs (12) de ladite doublure (5) pénétrant dans lesdites empreintes (13).

## Patentansprüche

1. Landwirtschaftliche Maschine (1) wie beispielsweise ein Scheibenmäher, ein Schwader oder Ähnliches, die während des Gebrauchs zumindest teilweise auf dem Boden aufliegt und mit einem Arbeitselement (2) und Kufen (4) versehen ist, die dazu vorgesehen sind, über den Boden zu gleiten, wobei die Kufen (4) in einer unteren Wand (3) des Arbeitselements (2) gebildet oder fest mit der unteren Wand (3) verbunden sind, wobei jede Kufe (4) mit einer Verstärkung (5) versehen ist, die mindestens ein vorderes Ende (8) und beiderseits des vorderen Endes (8) eine Stirnkante (9) aufweist,
wobei die landwirtschaftliche Maschine (1) **dadurch gekennzeichnet ist, dass** mindestens eine der Stirnkanten (9) der Verstärkung (5) von jeder Kufe (4) eine Erhebung (12) aufweist, von der zumindest ein Teil in eine Kavität (13) eindringt, die in der entsprechenden Kufe (4) gebildet ist.

2. Landwirtschaftliche Maschine nach Anspruch 1, **dadurch gekennzeichnet, dass** die Breite des Endes oder jedes vorderen Endes (8) jeder Verstärkung (5) kleiner ist als die maximale Breite der Verstärkung (5).

3. Landwirtschaftliche Maschine nach einem der Ansprüche 1 und 2, **dadurch gekennzeichnet, dass** jede Erhebung (12) mittels einer, zumindest teilweisen, Biegung der entsprechenden Stirnkante (9) nach oben gebildet ist.

4. Landwirtschaftliche Maschine nach einem der Ansprüche 1 bis 3, **dadurch gekennzeichnet, dass** jede Stirnkante (9) einen Winkel α mit der normalen Fahrtrichtung (Av) der Maschine (1) im Gebrauch bildet.

5. Landwirtschaftliche Maschine nach einem der Ansprüche 1 bis 4, **dadurch gekennzeichnet, dass** jede Verstärkung (5) eine Symmetrieebene (P) aufweist, die vertikal und parallel zu der Fahrtrichtung (Av) der Maschine (1) im Gebrauch ausgerichtet ist und dadurch, dass ihre beiden Stirnkanten (9) entsprechend den Flügeln eines nach hinten offenen Vs angeordnet sind und gegenüber der Symmetrieebene (P), die der betreffenden Verstärkung (5) zugehörig ist, symmetrisch angeordnet sind.

6. Landwirtschaftliche Maschine nach einem der Ansprüche 1 bis 5, **dadurch gekennzeichnet, dass** die Kavitäten (13), die in jeder Kufe (4) gebildet sind, aus nicht durchgehenden Auskehlungen bestehen.

7. Landwirtschaftliche Maschine nach Anspruch 5, **dadurch gekennzeichnet, dass** sie aus einem Scheibenmäher (2') mit Drehachsen (Ax) besteht, die im Wesentlichen vertikal oder leicht nach vorne geneigt sind, wobei ein Mähbalken das Arbeitselement (2) ausbildet und ein Gehäuse aus mindestens zwei Teilen umfasst und dessen unterer Teil aus der unteren Wand (3) gebildet ist, die mit den Kufen (4) versehen ist, und dadurch, dass die Symmetrieebene (P) jeder Verstärkung (5) die Drehachse (Ax) der Scheibe (2') umfasst, die der entsprechenden Kufe (4) zugehörig ist.

8. Landwirtschaftliche Maschine nach einem der Ansprüche 1 bis 7, **dadurch gekennzeichnet, dass** jede Verstärkung (5) starr mit der entsprechenden Kufe (4) und/oder dem Arbeitselement (2) montiert ist.

9. Landwirtschaftliche Maschine nach einem der Ansprüche 1 bis 8, **dadurch gekennzeichnet, dass** das Ende oder jedes vordere Ende (8) jeder Verstärkung (5) aus einer Lasche besteht, die nach oben gebogen ist, und deren Endabschnitt (8') zum Eingreifen durch Einhaken in eine Öffnung oder Aussparung (10) der unteren Wand (3) und/oder der entsprechenden Kufe (4) ausgebildet ist.

10. Landwirtschaftliche Maschine nach Anspruch 9, **dadurch gekennzeichnet, dass** die vordere Einhakverbindung jeder Verstärkung (5) mit der entsprechenden Kufe (4) und/oder der unteren Wand (3), und somit die Montage jeder Verstärkung (5) an der entsprechenden Kufe (4) mittels mindestens einer Schraubverbindung in Position verriegelt und blockiert wird, vorzugsweise an den Stellen (16) zur Schraubbefestigung, die sich gegenüberliegend dem vorderen Ende (8) der betreffenden Verstärkung (5) befinden.

11. Landwirtschaftliche Maschine nach einem der Ansprüche 9 und 10, **dadurch gekennzeichnet, dass** der oder jeder Endabschnitt (8') im Wesentlichen in S-Form aufgebaut ist, dadurch, dass die Öffnung (10) aus einem Spalt besteht und dass eine Verriegelungsstruktur (11), die diesem Spalt (10) zugehörig ist, an der betreffenden Kufe (4) und/oder der unteren Wand (3) vorhanden ist.

12. Landwirtschaftliche Maschine nach einem der Ansprüche 1 bis 11, **dadurch gekennzeichnet, dass** die Seitenkanten (15) der Verstärkung (5) jeweils eine Erhebung (15') aufweisen, von der zumindest ein Teil in Kavitäten (13') eindringt, die in der Kufe (4) gebildet sind.

13. Kufen-/Verstärkungsbaugruppe für eine landwirtschaftliche Maschine (1) wie beispielsweise einen Scheibenmäher, einen Schwader oder Ähnliches nach einem der Ansprüche 1 bis 12, wobei die Baugruppe **dadurch gekennzeichnet ist, dass** sie zum einen aus einer Kufe (4) und zum anderen aus einer Verstärkung (5) gebildet ist, die starr mit der Kufe (4) verbunden ist, indem sie auf der Unterseite dieser Kufe (4) angebracht ist, wobei die Kufe (4) und die Verstärkung (5) aus austauschbaren Verschleißteilen bestehen, dadurch, dass die Verstärkung (5) aus einer geformten Metallplatte besteht, mit Stirnkanten (9), die beiderseits des vorderen Endes (8) der Verstärkung (5) angeordnet und mit Erhebungen (12) versehen sind, und dadurch, dass die Kufe (4) Kavitäten (13) umfasst, die die Erhebungen (12) der Verstärkung (5), die in die Kavitäten (13) eindringen, mittels Eingriff oder Einschieben zumindest teilweise aufnehmen.

## Claims

1. Agricultural machine (1) such as a disc mower, windrower or the like, resting at least partially in support on the ground during use thereof and provided with a working element (2) and shoes (4) intended to slide over the ground, these shoes (4) being formed in a lower wall (3) of said working element (2) or rigidly connected to this lower wall (3), each shoe (4) being provided with a lining (5) having at least one front end (8) and, on either side of this front end (8), a front edge (9),
agricultural machine (1) **characterised in that** at least one of the front edges (9) of the lining (5) of each shoe (4) has a raised area (12) of which at least a portion enters an indentation (13) formed in the corresponding shoe (4).

2. Agricultural machine according to claim 1, **characterised in that** the width of the end or of each front end (8) of each lining (5) is smaller than the maximum width of said lining (5).

3. Agricultural machine according to any one of claims 1 and 2, **characterised in that** each raised area (12) is formed by an at least partial upward curvature of the corresponding front edge (9).

4. Agricultural machine according to any one of claims 1 to 3, **characterised in that** each front edge (9) forms an angle α with the normal direction of advance (Av) of the machine (1) in use.

5. Agricultural machine according to any one of claims 1 to 4, **characterised in that** each lining (5) has a plane of symmetry (P) oriented vertically and parallel to the direction of advance (Av) of the machine (1) in use and **in that** their front edges (9) are disposed like the wings of a rear-opening V and arranged symmetrically relative to the plane of symmetry (P) associated with the lining (5) in question.

6. Agricultural machine according to any one of claims 1 to 5, **characterised in that** the indentations (13) formed in each shoe (4) consist of blind grooves.

7. Agricultural machine according to claim 5, **characterised in that** it consists of a disc mower (2') with axes of rotation (Ax) substantially vertical or slightly inclined forwards, with a cutter bar constituting the working element (2) and comprising a housing in at least two parts and of which the lower part consists of the lower wall (3) provided with shoes (4) and **in that** the plane of symmetry (P) of each lining (5) comprises the axis of rotation (Ax) of the disc (2') associated with the corresponding shoe (4).

8. Agricultural machine according to any one of claims 1 to 7, **characterised in that** each lining (5) is assembled rigidly with the corresponding shoe (4) and/or the working element (2).

9. Agricultural machine according to any one of claims 1 to 8, **characterised in that** the end or each front end (8) of each lining (5) consists of an upwardly curved tongue of which the end portion (8') is shaped to engage by hooking in an opening or cutaway (10) of the lower wall (3) and/or of the corresponding shoe (4).

10. Agricultural machine according to claim 9, **characterised in that** the front connection by hooking of each lining (5) to the corresponding shoe (4) and/or the lower wall (3), and therefore mounting of each lining (5) at the level of the corresponding shoe (4), is locked and secured in position by at least one screw connection, preferably at the level of screw fixing sites (16) situated opposite the front end (8) of the lining (5) in question.

11. Agricultural machine according to any one of claims 9 and 10, **characterised in that** the or each end portion (8') is structured substantially in an S shape, **in that** the opening (10) consists of a slot and **in that** a locking structure (11) associated with this slot (10) is presented on the shoe (4) concerned and/or the lower wall (3).

12. Agricultural machine according to any one of claims 1 to 11, **characterised in that** the lateral edges (15) of the lining (5) each have a raised area (15') of which at least a portion enters the indentations (13') formed in the shoe (4).

13. Shoe/lining assembly for an agricultural machine (1) such as a disc mower, windrower or the like according to any one of claims 1 to 12, assembly **characterised in that** it consists on the one hand of a shoe (4) and on the other hand of a lining (5) assembled rigidly with the shoe (4) by being applied to the lower face of this shoe (4), said shoe (4) and said lining (5) consisting of interchangeable wearing parts, **in that** the lining (5) consists of a shaped metal plate, with front edges (9) situated on either side of the front end (8) of said lining (5) and provided with raised areas (12), and **in that** the shoe (4) comprises indentations (13) receiving at least partially, by engagement or nesting, the raised areas (12) of said lining (5) entering said indentations (13).
